# EUROPÄISCHE PATENTANMELDUNG

(11) **EP 4 268 606 A1**
(43) Veröffentlichungstag der Anmeldung: **01.11.2023**
(21) Anmeldenummer: 23163696.0
(22) Anmeldetag: 23.03.2023
(51) Int. Cl.: A23L 3/24, A23C 3/037, A23L 3/00, A23L 3/3409, F16K 27/02, F16K 49/00

(54) **GEKÜHLTER VERTEILERKOPF FÜR DAMPF-INFUSIONSBEHÄLTER UND DAMPF-INFUSIONSSYSTEM**

(30) Priorität: 25.04.2022 DE 102022109909
(71) Anmelder: KRONES Aktiengesellschaft, 93073 Neutraubling (DE)
(72) Erfinder: Feilner, Roland, 93073 Neutraubling (DE); Runge, Torsten, 93073 Neutraubling (DE); Scherer, Christoph Hans, 93073 Neutraubling (DE); Oehmichen, Thomas, 93073 Neutraubling (DE); Hoeller, Stefan, 93073 Neutraubling (DE); Justl, Florian, 93073 Neutraubling (DE)
(74) Vertreter: Grünecker Patent- und Rechtsanwälte PartG mbB

(57) **Zusammenfassung**

Verteilerkopf zum Einbringen eines flüssigen Produktes, insbesondere eines flüssigen Lebensmittelproduktes, in einen Dampf-Infusionsbehälter, umfassend wenigstens eine Öffnung zum Einbringen des Produktes in den Dampf-Infusionsbehälter in Form eines, insbesondere aus Teilstrahlen zusammengesetzten, Produktstrahls, wobei der Verteilerkopf wenigstens einen Kühlkanal zum Kühlen des Verteilerkopfes umfasst.

## Beschreibung

Die Erfindung bezieht sich auf einen Verteilerkopf zum Einbringen eines flüssigen Produktes in einen Dampf-Infusionsbehälter, auf ein Dampf-Infusionssystem, das einen solchen Dampf-Infusionsbehälter umfasst, ein System zur Ultrahocherhitzung eines flüssigen Produktes sowie ein Verfahren zur Herstellung des Verteilerkopfes.

Es ist bekannt, flüssige Produkte, insbesondere flüssige Lebensmittelprodukte wie beispielsweise Milch, Joghurt, Saft oder Ähnliches durch Erhitzen haltbar zu machen. Dafür können sie insbesondere durch Dampf-Infusion in einem Dampf-Infusionsbehälter mit Überdruck direkt durch Dampf erhitzt werden. "Direkt" kann in diesem Zusammenhang insbesondere bedeuten, dass das Produkt durch direkten Kontakt bzw. Wärmetausch mit Dampf erhitzt wird.

Beispielsweise kann das Produkt als Produktstrahl im oberen Bereich des Dampf-Infusionsbehälters zugeführt werden und, während es sich senkrecht nach unten durch den Dampf-Infusionsbehälter bewegt, dort mit heißen, bevorzugt gesättigten Dampf, beispielsweise zwischen 120°C und 160°C heißem Dampf, erhitzt werden. Während der Zeit, in der der Produktstrahl senkrecht durch den Dampf-Infusionsbehälter fällt, kann der Produktstrahl auf die gewünschte Temperatur für die gewünschte Dauer erhitzt werden. Anschließend wird das fertig erhitzte Produkt in einem, oft konisch ausgebildeten Bereich des Infusionsbehälters am unteren Ende des Infusionsbehälters aufgefangen. Der, insbesondere konisch, ausgebildete Bereich des Infusionsbehälters am unteren Ende des Infusionsbehälters kann optional gekühlt werden, um ein Anbacken des Produktes an den Wänden zu verhindern oder zu verringern.

Ein Produktstrahl kann aus einem durchgehenden Strahl oder aus mehreren Teilstrahlen gebildet sein. Verteilerköpfe zum Erzeugen eines solchen Produktstrahles in einem Infusionsbehälter sind beispielsweise aus der EP 1 536 702 B1 oder der DE 69 209 097 T2 bekannt.

Jedoch werden die bekannten Verteilerköpfe durch den Dampf des Dampf-Infusionssystems erhitzt, so dass es insbesondere zu schnellem Anbacken des Produktes und somit häufigem Reinigungsbedarf kommen kann, was sich insbesondere negativ auf die Laufzeit, d.h. die Zeit, die der Verteilerkopf ohne Reinigung mit akzeptabler Produktqualität laufen kann, auswirken kann.

Aufgabe der Erfindung ist es daher, einen Verteilerkopf der eingangs genannten Art bereitzustellen, der dieses Problem nicht oder in geringerem Maße aufweist, so dass insbesondere die Laufzeit erhöht werden kann.

Diese Aufgabe wird durch einen Verteilerkopf zum Einbringen eines flüssigen Produkts gemäß Anspruch 1, ein Verfahren zur Herstellung eines Verteilerkopfes gemäß Anspruch 14, ein Dampf-Infusionssystem gemäß Anspruch 16 und ein System zur Ultrahocherhitzung eines flüssigen Produktes gemäß Anspruch 17 gelöst. Verteilhafte Weiterbildungen finden sich in den Unteransprüchen.

Die Erfindung stellt einen Verteilerkopf zum Einbringen eines flüssigen Produktes, insbesondere eines flüssigen Lebensmittelproduktes, wie beispielsweise Milch, Joghurt, Saft, Milchersatzprodukten oder Ähnliches, in einen Dampf-Infusionsbehälter bereit, umfassend wenigstens eine Öffnung zum Einbringen des Produktes in den Dampf-Infusionsbehälter in Form eines, insbesondere aus Teilstrahlen zusammengesetzen, Produktstrahls, wobei der Verteilerkopf wenigstens einen Kühlkanal zum Kühlen des Verteilerkopfes umfasst. Es hat sich gezeigt, dass ein solcher Verteilerkopf im Betrieb effektiver gekühlt werden kann und somit insbesondere die Laufzeit erhöhen kann.

Es können insbesondere auch mehr als ein Kühlkanal zum Kühlen des Verteilerkopfes vorgesehen sein, bespielsweis zwei oder drei Kühlkanäle. Die nachfolgend für einen Kühlkanal beschriebenen Merkmale können bei Verteilerköpfen mit mehreren Kühlkanälen insbesondere für alle Kühlkanäle gelten. Es ist aber auch denkbar, dass Kühlkanäle eines Verteilerkopfes unterschiedlich ausgebildet sind.

Der Verteilerkopf ist zum Einbringen eines Produktes in einen Dampf-Infusionsbehälter ausgebildet. Ein Dampf-Infusionsbehälter, für den der Verteilerkopf ausgebildet ist, kann insbesondere ein zuvor beschriebener Dampf-Infusionsbehälter oder ein in EP 3 171 701 B1, Figur 2, beschriebener Dampf-Infusionsbehälter sein. Der Dampf-Infusionsbehälter kann dazu ausgebildet sein, dass von oben ein Produkt in Form eines Produktstrahls eingeführt wird und seitlich Dampf zugeführt wird. Typischerweise können dabei das Produkt und der Dampf unter Druck, z.B. zwischen 2 Bar und 6,2 Bar, z.B. zwischen 2,7 Bar und 4,8 Bar, z.B. 3,6 Bar, stehen, so dass im Dampf-Infusionsbehälter Temperaturen von etwa zwischen 120°C und 160°C, z.B. zwischen 130°C bis 150°C, z.B. 140°C erreicht werden können. Das Produkt kann bei seiner Zuführung in den Dampf-Infusionsbehälter bereits erwärmt sein, beispielsweise eine Temperatur von zwischen 70°C und 90 °C, z.B. ca. 80°C, aufweisen. Das in den Dampf-Infusionsbehälter eingeführte Produkt kann sich dann als Produktstrahl entlang dem, insbesondere zylindrischen, Körper des Dampf-Infusionsbehälters bewegen, insbesondere senkrecht nach unten, und dabei durch den Dampf erwärmt werden während es sich durch den, insbesondere zylindrischen, Körper des Dampf-Infusionsbehälters bewegt. Im unteren Bereich des Dampf-Infusionsbehälters kann das Produkt, insbesondere durch einen konischen Bereich, aufgefangen werden. Dieser insbesondere konische Bereich kann optional gekühlt sein, z.B. auf eine Temperatur von zwischen 100°C und 140°C, beispielsweise zwischen 110°C und 130°C, z.B. 120°C, um ein Anbacken des Produktes zu verhindern.

Der Verteilerkopf umfasst insbesondere wenigstens eine Öffnung zum Einbringen des Produkts, die typischerweise so angeordnet ist/sind, dass der Produktstrahl in eine Richtung austritt, die, insbesondere bei Verwendung des Verteilerkopfes in einem Dampf-Infusionsbehälter, senkrecht nach unten angeordnet sein kann. Insbesondere kann der Verteilerkopf so ausgebildet sein, dass alle Teilstrahlen des Produktstrahls parallel zueinander in eine Richtung austreten. Diese Richtung wird als die Richtung des Produktstrahls bezeichnet.

Der Verteilerkopf kann optional eine oder mehrere Anschlussmöglichkeiten für eine Produktzuführung, z.B. für ein Rohr, umfassen und/oder eine oder mehrere Produktzuführungen, z.B. ein oder mehrere Rohre, umfassen. Er kann des Weiteren optional eine Aufweitvorrichtung zwischen Produktzuführung und der wenigstens einen Öffnung zum Einbringen des Produkts, z.B. eine Kammer, umfassen. Dort kann insbesondere ein durch ein Rohr zum Verteilerkopf hingeführter Produktstrom auf die durch die wenigstens eine Öffnung zum Einbringen des Produkts des Verteilerkopfes vorgegebene Produktstrahlbreite aufgeweitet werden. Der Verteilerkopf kann einen Abschluss mit der wenigstens einen Öffnung, z.B. eine gerade oder gebogene Platte mit der wenigstens einen Öffnung für den Produktstrahl, umfassen. In der optionalen Aufweitvorrichtung kann sich das Produkt sammeln, bevor es durch die wenigstens eine Öffnung für den Produktstrahl, z.B. in einer gerade oder gebogen Platte, den Verteilerkopf verlassen kann. Der Verteilerkopf, insbesondere der Abschluss mit der wenigstens einen Öffnung, die optionale Aufweitvorrichtung und die optionale Anschlussmöglichkeit für den Produktstrahl oder die Produktzuführung können einstückig oder mehrstückig ausgebildet sein. Insbesondere kann der Abschluss mit der wenigstens einen Öffnung einstückig oder mehrstückig, z.B. aus verschiedenen Materialien, die miteinander verbunden sein können, oder mehrstückig aus dem gleichen Material, das durch ein weiteres Material oder andere Befestigungsmittel miteinander verbunden sein kann, ausgebildet sein.

Die wenigstens eine Öffnung zum Einbringen des Produktes kann insbesondere flächig angeordnet sein, also bei Projektion auf eine Ebene senkrecht zum Produktstrahl kann die Anordnung, insbesondere das durch die wenigstens eine Öffnung erzeugte Muster oder die Form der wenigstens einen Öffnung selber, eine Ausdehnung in zwei Richtungen senkrecht zueinander aufweisen. Insbesondere kann eine solche flächige Anordnung der wenigstens einen Öffnung zum Einbringen des Produktes eine Anordnung in einer Ebene oder auf einer gekrümmten Fläche sein. Beispielsweise kann bei einem rundem, insbesondere kreisförmigen, Verteilerkopf die Anordnung in einem Bereich entlang des Kreisumfangs angeordnet sein, und somit eine Ausdehnung in zwei Richtungen senkrecht zueinander aufweisen.

Der Verteilerkopf, insbesondere im Bereich der wenigstens einen Öffnung, insbesondere sein Abschluss, kann aus einer zusammenhängenden Platte, z.B. einer geraden oder gebogenen Platte, ausgebildet sein. In anderen Ausführungsformen kann der Verteilerkopf im Bereich der wenigstens einen Öffnung, insbesondere sein Abschluss, aus mehreren separaten Teilbereichen, beispielsweise gebogenen Platten, zusammengesetzt sein, die miteinander verbunden oder separat sein können.

Der Verteilerkopf umfasst wenigstens einen Kühlkanal zum Kühlen des Verteilerkopfes. Dabei wird unter dem Begriff "Kühlkanal" hierin ein Freiraum verstanden, der ein Kühlen des Verteilerkopfes ermöglichen kann. Beispielsweise kann in dem Freiraum ein mit Kühlmedium durchströmbares Rohr oder ein Kühlkörper, beispielsweise ein Kupferstab, angeordnet sein, um ein Kühlen des Verteilerkopfes zu ermöglichen. Insbesondere kann der Freiraum selbst auch mit einem Kühlmedium durchströmbar sein, z.B. wenn der Freiraum rohrartig ausgebildet ist.

Der wenigstens eine Kühlkanal kann, insbesondere bei Projektion in Richtung des Produkstrahls, außerhalb oder neben der wenigstens einen Öffnung angeordnet sein, insbesondere kann somit eine Interferenz des Kühlkanals mit der wenigstens einen Öffnung und ein Kühlen des Produktes durch den Kühlkanal in der Öffnung vermieden werden.

Der Produktstrahl wird, wenn man ihn in einer Ebene senkrecht zu seiner Bewegungsrichtung betrachtet, durch die kleinste konvexe geometrische Figur begrenzt, die alle Teile des Produktstrahls umfasst. Diese Figur kann insbesondere der kleinsten konvexen geometrischen Figur entsprechen, die alle Projektionen der wenigstens einen Öffnung umfasst, wobei die Projektion auf eine Ebene senkrecht zum Produktstrahl erfolgt. Beispielsweise kann es sich bei der kleinsten konvexen geometrischen Figur um den kleinsten Kreis oder das kleinste konvexe Polygon handeln, der/das alle der wenigstene einen Öffnung umfasst, wenn die wenigstens eine Öffnung kreisförmig angeordnet ist. Diese kleinste konvexe geometrische Figur begrenzt den Produktstrahl. Der Bereich innerhalb dieser kleinsten konvexen geometrischen Figur wird insbesondere als innerhalb (im Inneren) des Produktstrahls betrachtet. Der Bereich außerhalb dieser kleinsten konvexen geometrischen Figur wird insbesondere als außerhalb des Produktstrahls betrachtet.

Der Verteilerkopf kann einen äußeren und einen inneren Bereich umfassen. Der Produktstrahl kann, wenn man ihn in einer Ebene senkrecht zu seiner Bewegungsrichtung betrachtet, durch eine ebene geschlossene geometrische Figur begrenzt sein, die alle Teile des Produkstrahls umfasst, insbesondere die kleinste ebene geschlossene geometrische Figur, die alle Teile des Produkstrahls umfasst. Diese Figur kann insbesondere der kleinsten geometrischen Figur entsprechen, die alle Projektionen der wenigstens einen Öffnung umfasst, wobei die Projektion auf eine Ebene senkrecht zum Produkstrahl erfolgt. Beispielsweise kann es sich bei der geometrischen Figur um den kleinsten Kreis oder das kleinste Polygon handeln, der/das alle der wenigstens einen Öffnung umfasst, wenn die wenigstens eine Öffnung kreisförmig angeordnet ist. Die Projektion des Bereichs innerhalb dieser geometrischen Figur auf den Verteilerkopf, insbesondere den Bereich des Verteilerkopf mit der wenigstens einen Öffnung, in Richtung des Produktstrahls wird nun als innerer Bereich des Verteilerkopfes betrachtet. Die Projektion des Bereichs außerhalb dieser geometrischen Figur auf den Verteilerkopf, insbesondere den Bereich des Verteilerkopfs mit der wenigstens einen Öffnung, in Richtung des Produktstrahls wird nun als äußerer Bereich des Verteilerkopfes betrachtet. Unter der Mitte des Verteilerkopfes kann der Mittelpunkt der Fläche des Verteilerkopfs mit der mindestens einen Öffnung oder die Projektion des Schwerpunkts der, insbesondere kleinsten, geometrischen Figur auf den Verteilerkopf in Richtung des Produktstrahls verstanden werden. Der innere Bereich umfasst insbesondere nicht den äußeren Bereich. Der äußere Bereich kann den meisten Kontakt mit dem Dampf haben.

Der wenigstens eine Kühlkanal kann zumindest teilweise, insbesondere komplett, im äußeren und/oder inneren Bereich des Verteilerkopfes angeordnet sein. Insbesondere kann der wenigstens eine Kühlkanal zumindest teilweise, insbesondere komplett, umlaufend um den inneren Bereich angeordnet sein, insbesondere in Projektion auf den Bereich des Verteilerkopfes mit der mindestens einen Öffnung. Beispielsweise kann der wenigstens eine Kühlkanal zumindest teilweise, insbesondere komplett, entlang oder parallel der Grenze zwischen dem äußeren und dem inneren Bereich verlaufen. Alternativ oder zusätzlich kann der wenigstens eine Kühlkanal zumindest teilweise, insbesondere komplett, auf einer kreisbogenförmigen Bahn um die Mitte des Verteilerkopfes, insbesondere im äußeren und/oder inneren Bereich des Verteilerkopfes, verlaufen. Der Kreisbogen kann insbesondere einen Mittelpunktswinkel von mindestens 90°, z.B. mindestesn 180°, beispielsweise mindestens 270°, umfassen.

Durch eine zumindest teilweise Anordnung des wenigstens einen Kühlkanals im äußeren Bereich, der den meisten Kontakt mit dem Dampf haben kann, kann dieser effektiv gekühlt werden. Im inneren Bereich des Verteilerkopfes kann die Kühlung durch das Produkt ausreichend sein.

Bei einer zumindest teilweisen Anordnung des wenigstens einen Kühlkanals im inneren Bereich kann dieser effektiv gekühlt werden. Dadurch können insbesondere Ablagerungen weiter reduziert und die Laufzeit erhöht werden.

Der wenigstens eine Kühlkanal kann (in Projektion auf eine Ebene senkrecht zur Produktstrahlrichtung) zumindest teilweise zur Mitte des Verteilerkopfes und/oder ausgehend von der Mitte des Verteilerkopfes, insbesondere radial, verlaufen. Dadurch kann sich der Verteilerkopf besonders effektiv kühlen lassen.

Der Verteilerkopf kann im Bereich der wenigstens einen Öffnung mindestens einen öffnungsfreien Bereich umfassen, der so angeordnet und/oder ausgebildet ist, dass ein Produktstrahl gebildet wird, der einen Dampfeintritt in das Innere des Produktstrahls senkrecht zur Bewegungsrichtung des Produktstrahls ermöglicht. Insbesondere kann somit Dampf außerhalb des Produktstrahls in das Innere des Produktstrahls eintreten und sich dabei senkrecht zur Bewegungsrichtung des Produktstrahls bewegen. Es ist also insbesondere nicht notwendig, Dampf durch einen separaten Anschluss oder über die Produktdüse von oben in das Produkt einzuleiten, sondern Dampf kann seitlich in den Produktstrahl eintreten.

Durch den mindestens einen öffnungsfreien Bereich im Bereich der wenigstens einen Öffnung entsteht insbesondere mindestens ein nicht produktführender Bereich im Produktstrahl. Durch diesen mindestens einen nicht produktführenden Bereich kann es insbesondere zu mindestens einer Öffnung im Produktstrahl kommen, in dem kein Produkt geführt wird.

Der wenigstens eine Kühlkanal kann zumindest teilweise in einem des mindestens einen öffnungsfreien Bereichs verlaufen. Dies kann insbesondere eine effektive Kühlung des Verteilerkopfes ermöglichen. Dadurch können sich Ablagerungen reduzieren und die Laufzeit erhöhen lassen.

Die Öffnungen des Verteilerkopfes können in Segmenten angeordnet sein, die durch einen oder mehrere öffnungsfreie Bereiche voneinander getrennt sein kann.

Ein Segment, insbesondere jedes Segment, kann dabei eine oder mindestens zwei Öffnungen umfassen, insbesondere beispielsweise mindestens vier oder mindestens zehn Öffnungen, beispielsweise mehr als 20 Öffnungen umfassen. Hierbei kann insbesondere die Anzahl der Öffnungen je Segment gleich oder verschieden sein. Beispielsweise kann ein Verteilerkopf ein oder mehrere erste Segmente mit jeweils mit einer ersten Anzahl von Öffnungen und ein oder mehr zweite Segmente mit jeweils einer zweiten Anzahl von Öffnungen umfassen. Die zweite Anzahl von Öffnungen kann größer sein als die erste Anzahl von Öffnungen, beispielsweise um einen Faktor zwischen 1,2 und 3 größer, beispielsweise einen Faktor 1,5.

Ein Segment kann mindestens zwei Öffnungen umfassen. Die von einem Segment umfassten Öffnungen können jeweils voneinander durch Bereiche ohne Öffnung getrennt sein. Der Abstand von einer Öffnung zur nächsten Öffnung in einem Segment kann kleiner sein als der Abstand von zwei durch einen öffnungsfreien Bereich getrennten Öffnungen, insbesondere der Abstand von zwei Öffnungen aus zwei verschiedenen Segmenten, insbesondere beispielsweise um einen Faktor 2 oder mehr kleiner, beispielsweise um einen Faktor 5 oder mehr kleiner. Insbesondere kann diese Bedingung für jede zwei Öffnungen eines Segments und jede zwei Öffnungen, die durch einen öffnungsfreien Bereich getrennt werden, also insbesondere in zwei verschiedenen Segmenten liegen, erfüllt sein.

Verschiedene Segmente eines Verteilerkopfes können symmetrisch zueinander angeordnet sein, insbesondere punktsymmetrisch und/oder achsensymmetrisch zueinander.

Ein Verteilerkopf kann eine gerade oder eine ungerade Anzahl an Segmenten umfassen. Die Segmente können beispielsweise die Form eines Kreissektors, eines Kreisbogens (z.B. ausgehend vom Mittelpunkt des Produktstrahls), einer abgerundeten X-Form, eine Schmetterlingsform, eine Hantel-Form, oder andere Formen aufweisen. Insbesondere können die Segmente als Kreisbögen in einem festen Abstand von dem Mittelpunkt des Produktstrahls und/oder als Kreisbögen mit verschiedenen Abständen vom Mittelpunkt des Produktstrahls angeordnet sein. Mehrere Segmente in einem festen Abstand vom Mittelpunkt des Produktstrahls können optional untereinander in gleichem Abstand voneinander entlang des Kreisumfangs angeordnet sein.

Der wenigstens eine Kühlkanal kann (in Projektion auf eine Ebene senkrecht zum Produktstrahl) zumindest teilweise zwischen Segmenten verlaufen. Dadurch können insbesondere die Bereiche des Verteilerkopfes, die mit mehr Dampf in Kontakt kommen können, besser gekühlt werden.

Der wenigstens eine Kühlkanal kann (insbesondere in Projektion auf eine Ebene senkrecht zum Produktstrahl) flächig mit wenigstens einem Richtungswechsel verlaufen, insbesondere kann der wenigstens eine Kühlkanal entlang einer Fläche in einem Muster verlaufen, insbesondere kann der wenigstens eine Kühlkanal zumindest teilweise mäanderförmig, d.h. in der Form eines Mäanders, verlaufen. Dadurch lässt sich der Verteilerkopf besonders effektiv und gleichmäßig kühlen. Alternativ sind auch Verläufe in anderen Formen denkbar, um eine Fläche abzudecken.

Der Querschnitt des wenigstens einen Kühlkanals kann größer sein als der Querschnitt wenigstens einer der wenigstens einen Öffnung. Dies kann insbesondere bei kleinen Öffnungen erforderlich sein, da sonst insbesondere der Druckverlust innerhalb des wenigstens einen Kühlkanals zu hoch werden kann. Dabei kann insbesondere die Querschnittfläche senkrecht zur Ausbreitungsrichtung des wenigstens einen Kühlkanals bzw. senkrecht zur wenigstens einen Öffnung (der Richtung des Produktstrahls) betrachtet werden. Beispielsweise kann der Querschnitt eines Kühlkanals mindestens doppelt oder mindestens fünffach so groß sein wie der Querschnitt einer Öffnung.

Der wenigstens eine Kühlkanal kann ein Material mit hoher Wärmeleitfähigkeit, insbesondere mehr als 100 W/(m K), umfassen, insbesondere kann der wenigstens eine Kühlkanal aus einem solchen Material bestehen. Insbesondere kann der Kühlkanal Kupfer umfassen oder aus Kupfer bestehen. Dadurch kann ein verbesserter Wärmeabtransport und somit eine effektivere Kühlung erzielt werden.

Der Verteilerkopf kann zumindest teilweise konturiert sein, wobei insbesondere die zum Dampf gewandte Seite des Verteilerkopfes und/oder der äußere Bereich des Verteilerkopfes und/oder wenigstens ein Bereich ohne Öffnungen, konturiert sein kann. Ein konturierter Bereich kann insbesondere den Vorteil haben, dass entstehende Kondensat-Tropfen abgeleitet werden können, damit diese nicht mit dem Produktstrahl interferieren. Insbesondere kann ein konturierter äußerer Bereich, in welchem keine Öffnungen vorgesehen sind, den Vorteil haben, dass entstehende Kondensat-Tropfen nach außen abgeleitet werden und nicht mit dem Produktstrahl interferieren. Das Kondensat kann so "außerhalb" des Produktstrahles nach unten fallen.

Unter konturiert ist in diesem Zusammenhang zu verstehen, dass die zum Dampf gewandet Seite des Verteilerkopfes in Richtung des Dampfraumes Wölbungen bzw. gewölbte Oberflächen aufweist, an welchen sich das Kondensat sammeln und abgeleitet werden kann. Hierbei kann es sich beispielsweise um eine zumindest teilweise umlaufende Abtropfkante oder Abtropfnasen handeln. Gemäß einer Ausführungsform können die Konturierungen im Bereich der Kühlkanäle angeordnet sein, also beispielsweise unterhalb der Kühlkanäle verlaufen.

Desweiteren kann zumindest ein Teil des Verteilerkopfes, insbesondere ein Teil einer Oberfläche und/oder die wenigstens eine Öffnung und/ oder die zum Dampf-Infusionsbehälterinneren gewandte Seite des Verteilerkopfes, beschichtet sein, insbesondere mit einer Beschichtung aus der Klasse der "Diamantähnlichen Kohlenstoffbeschichtungen" (Diamond-like coating oder DLC), die insbesondere mit Silizium, Sauerstoff und/oder Fluor modifiziert sein kann. Unter der Oberfläche des Verteilerkopfes kann insbesondere die Gesamtheit der Flächen, die den Verteilerkopf von außen begrenzen, insbesondere der Seite, die bei Verwendung mit Produkt in Kontakt steht, verstanden werden.

Die Schichtdicke der Beschichtung kann insbesondere 3-5 µm betragen. Die Beschichtung kann insbesondere mittels PACVD-Verfahren (Plasma-assisted Chemical Vapor Deposition) appliziert sein oder werden. Durch den Einbau geeigneter Elemente wie Silizium, Sauerstoff oder Fluor kann die Beschichtung so modifiziert sein oder werden, dass ihre Oberflächenenergie verringert ist oder sinkt und ihre Antihaftwirkung verstärkt ist oder zunimmt.

Der wenigstens eine Kühlkanal kann rohrartig ausgebildet sein und/oder ein Rohr umfassen. Dadurch ist eine besonders effektive Kühlung möglich.

Der wenigstens eine Kühlkanal kann mit einem Kühlmedium durchströmbar sein. Dadurch ist eine besonders performante Kühlung möglich. Es ist auch denkbar, dass der wenigstens eine Kühlkanal nicht mit einem Kühlmedium durchströmbar ist, z.B. wenn der wenigstens eine Kühlkanal aus Kupfer besteht. Insbesondere kann der wenigstens eine Kühlkanal mit einem Material mit hoher Wärmeleitfähigkeit, insbesondere einer Wärmeleitfähigkeit von mehr als 100 W/(m K), gefüllt sein oder aus ihm gebildet sein.

Der wenigstens eine Kühlkanal kann, insbesondere im Betrieb, in wenigstens einem Kühlkreislauf angeordnet sein, insbesondere kann der wenigstens eine Kühlkreislauf geschlossen sein. Bei einem geschlossenen Kühlkreislauf kann das Kühlmedium in einem geschlossenen Kreislauf zirkulieren. Insbesondere kann ein geschlossener Kühlkreislauf ermöglichen, dass sich die Qualität und Quantität des Kühlmendiums im Betrieb nur geringfügig ändern.

Der wenigstens eine Kühlkanal kann am Verteilerkopf wenigstens einen Zulauf und wenigstens einen Ablauf für das Kühlmedium umfassen. Dadurch lassen sich besonders effektive Kühlungen erzielen. Der Zulauf kann insbesondere dafür ausgebildet sein, mit einer Kühlmittelzufuhr verbunden zu werden, und ein Ablauf kann dafür ausgebildet sein kann, mit einer Kühlmittelabfuhr verbunden zu werden. Durch die Verbindung einer Kühlmittelzufuhr mit dem Zulauf und einer Kühlmittelabfuhr mit dem Ablauf kann ein geschlossener Kühlkreislauf erzeugt werden.

Insbesondere kann der wenigstens eine Kühlkanal am Verteilerkopf einen Zulauf und wenigstens zwei Abläufe für das Kühlmedium umfassen. Alternativ oder zusätzlich kann der wenigstens eine Kühlkanal am Verteilerkopf wenigstens zwei Zuläufe und einen Ablauf für das Kühlmedium umfassen. Dabei kann insbesondere der Zulauf dafür ausgebildet sein, das Kühlmedium in den Kühlkanal des Verteilerkopfs zu transportieren und der Ablauf dafür ausgebildet sein, das Kühlmedium abzutransportieren.

Der wenigstens eine Kühlkanal kann ein Material mit hoher Wärmeleitfähigkeit, insbesondere mehr als 100 W/(m K), umfassen, insbesondere kann der wenigstens eine Kühlkanal aus einem solchen Material bestehen. Insbesondere kann der wenigstens eine Kühlkanal aus Kupfer bestehen oder Kupfer umfassen. Somit kann der Kühlkanal als Wärmeleitkanal ausgildet sein, der insbesondere dazu geeignet sein kann, durch Abführen von Wärme den Verteilerkopf zu kühlen.

Insbesondere kann der wenigstens eine Kühlkanal - umfassend ein Material mit hoher Wärmeleitfähigkeit - als sogenannte heat pipe Wärme abführen, ohne dass ein Kühlmedium durch den wenigstens einen Kühlkanal geleitet werden muss. Heat pipes können bevorzugt für Bereiche vorgesehen werden, in denen keine Kühlung durch ein Kühlmedium erfolgen kann bzw. eine Kühlung durch ein Kühlmedium sehr aufwendig ist, beispielsweise für den inneren Bereich des Verteilerkopfs.

Die heat pipes können insbesondere oberflächennah - bezogen auf die nach innen, insbesondere im Betrieb zur Innenseite des Dampf-Infusionsbehälters, gerichtete Seite des Verteilerkopfes, die insbesondere im Betrieb in Kontakt mit dem Dampf kommen kann - angeordnet oder verbaut sein oder werden.

Ein Kühlkanal, der aus einem Material mit hoher Wärmeleitfähigkeit besteht oder ein solches Material umfasst, insbesondere eine heat pipe, kann insbesondere im inneren Bereich des Verteilerkopfes angeordnet sein oder werden.

Der Verteilerkopf kann wenigstens einen Kühlkanal umfassen, der nicht mit einem Kühlmedium durchströmbar ist sowie wenigstens einen Kühlkanal umfassen, der mit einem Kühlmedium durchströmbar ist. Insbesondere kann der innere Bereich des Verteilerkopfes wenigstens einen Kühlkanal umfassen, der nicht mit einem Kühlmedium durchströmbar ist, insbesondere einen Kühlkanal, der aus einem Material mit hoher Wärmeleitfähigkeit besteht oder ein solches umfasst, beispielsweise eine heat pipe, und der äußere Bereich wenigstens einen Kühlkanal umfassen, der mit einem Kühlmedium durchströmbar ist. Bevorzugt greift der wenigstens eine Kühlkanal, der nicht durchströmbar ist, in den wenigstens einen Kühlkanal, der mit einem Kühlmedium durchströmbar ist, ein, so dass Wärme aus den wenigstens einen nicht-durchströmbaren Kühlkanal über den wenigstens einen durchströmbaren Kühlkanal abgeführt werden kann. Insbesondere kann in dem Bereich, in der der wenigstens eine nicht-durchströmbare Kühlkanal in den wenigstens einen mit Kühlmedium durchströmbaren Kühlkanal eingreift, ein direkter Kontakt zwischen dem Material mit hoher Wärmeleitfähigkeit und dem Kühlmedium möglich sein, so dass Wärme effektiv abgeführt werden kann.

Die Erfindung stellt weiterhin ein Verfahren zur Herstellung eines Verteilerkopfes bereit. Der Verteilerkopf kann eine oder mehrere der oben beschriebenen Eigenschaften aufweisen. Bei der Herstellung des Verteilerkopfes wird wenigstens ein Teil des Verteilerkopfes mittels generativer Fertigung hergestellt. Unter generativer Fertigung kann insbesondere ein Fertigungsverfahren verstanden werden, bei dem Material Schicht für Schicht aufgetragen wird und so dreidimensionale Gegenstände (Werkstücke) erzeugt werden können. Generative Fertigung kann auch unter den Bezeichnungen additive Fertigung, Rapid-Technologien oder 3D-Druck bekannt sein. Eine Herstellung mindestens eines Teils des Verteilerkopfes mittels generativer Fertigung kann insbesondere die Herstellung von komplexeren Kühlkanälen ermöglichen.

Mindestens ein Teil, insbesondere der restliche (nicht durch generative Fertigung hergestellte) Teil, des Verteilerkopfes kann mittels konventioneller Fertigung hergestellt werden. Unter konventioneller Fertigung kann insbesondere ein Fertigungsverfahren verstanden werden, bei dem entweder durch Abtragung oder Veränderung von Ausgangsmaterial die gewünschte Form erschaffen werden kann.

Bei der Herstellung des Verteilerkopfes kann beispielsweise ein Rohling, insbesondere eine Flanschplatte, mit wenigstens einen Kühlkanal mittels generativer Fertigung hergestellt werden und insbesondere die wenigstens eine Öffnung mittels konventioneller Fertigung, beispielsweise Bohrung, eingearbeitet werden.

Beispielsweise kann ein Metallpulver-Auftragsverfahren angewandt werden, um den wenigstens einen Kühlkanal herzustellen.

Der Verteilerkopf kann teilweise oder komplett aus Kunststoff, insbesondere aus Polyetheretherketon (PEEK), gefertigt sein oder werden. Damit können, ähnlich dem Duschkopf im Sanitärbereich, Ablagerungen leichter entfernt werden. Zudem verlangsamt Kunststoff generell die Bildung von Ablagerungen. Beispielsweise kann der Bereich der wenigstens eine Öffnung, insbesondere die Seite der wenigstens einen Öffnung, die im Betrieb in Kontakt mit dem Dampf kommen kann, aus Kunststoff gefertigt sein oder werden.

Der Verteilerkopf kann Produktdüsen umfassen. Die Produktdüsen, die in zumindest einer der wenigstens einen Öffnung angeordnet sein können, und insbesondere die Eigenschaften eines Teilstrahls beeinflussen können, beispielsweise die Geschwindigkeit und/oder Form des Teilstrahls beeinflussen können, können mittels generativer Fertigung hergestellt werden. Beispielsweise können die Produktdüsen zusammen mit dem Verteilerkopf hergestellt werden, insbesondere mitgedruckt werden. Alternativ können die Produktdüsen mittels generativer oder konventioneller Fertigung vorgefertigt und anschließend in eine, mehrere oder alle der wenigstens einen Öffnung eingesetzt werden. Die Produktdüsen können insbesondere teilweise oder komplett aus Kunststoff, insbesondere Polyetheretherketon (PEEK) hergestellt sein, oder diesen umfassen. Insbesondere kann der Teil der Produktdüsen, der im Betrieb in Kontakt mit dem Dampf kommen kann, aus Kunststoff gefertigt sein oder werden. Alternativ kann der Teil der Produktdüsen, der im Betrieb in Kontakt mit dem Produkt kommen kann, aus Kunststoff gefertigt sein oder werden. Die Produktdüsen können leicht über die Platte und/oder die Öffnung überstehen.

Die Erfindung stellt weiterhin ein Dampf-Infusionssystem bereit. Das Dampf-Infusionssystem umfasst wenigstens einen Dampf-Infusionsbehälter zum Erwärmen eines flüssigen Produktes, insbesondere eines flüssigen Lebensmittelproduktes, und wenigstens einen wie zuvor beschriebenen Verteilerkopf zum Einbringen des Produktes in den wenigstens einen Dampf-Infusionsbehälter.

Die Erfindung umfasst des Weiteren einen Dampf-Infusionsbehälter, der insbesondere eine, mehrere oder alle der Eigenschaften aufweisen kann, die zuvor im Zusammenhang mit einem Dampf-Infusionsbehälter beschrieben wurden. Bei dem Dampf-Infusionsbehälter, der insbesondere in einem Dampf-Infusionssystem wie zuvor beschrieben umfasst sein kann, können eine oder mehrere innenliegende Oberflächen des Dampf-Infusionsbehälters beschichtet sein, insbesondere mit einer (wie zuvor für den Verteilerkopf beschriebenen) Beschichtung aus der Klasse der "Diamantähnlichen Kohlenstoffbeschichtungen", die insbesondere mit Silizium, Sauerstoff und/oder Fluor modifiziert sein kann. Die Schichtdicke der Beschichtung kann insbesondere 3-5 µm betragen. Die Beschichtung kann insbesondere mittels PACVD-Verfahren (Plasma-assisted Chemical Vapor Deposition) appliziert sein oder werden. Durch den Einbau geeigneter Elemente wie Silizium, Sauerstoff oder Fluor kann die Beschichtung so modifiziert sein oder werden, dass ihre Oberflächenenergie verringert ist oder sinkt und ihre Antihaftwirkung verstärkt ist oder zunimmt. Beispielsweise kann der untere Konus, insbesondere die innenliegenden Oberflächen des unteren Konus, des Dampf-Infusionsbehälters mit der zuvor beschriebenen Beschichtung beschichtet sein. Dies kann insbesondere die Bildung von Ablagerungen bzw. Verschmutzungen, auch Fouling genannt, reduzieren, und somit insbesondere die Laufzeit des Dampf-Infusionsbehälter zwischen notwendigen Reinigungszyklen erhöhen. Ebenso können beispielsweise innenliegende Vorrichtungen zur Dampfverteilung und/oder Teile der oder die gesamte (der Innenseite des Dampf-Infusionssystem zugewandten) Oberfläche des, insbesondere zylindrischen, Körpers beschichtet sein.

Die Erfindung ist ferner auf ein Dampf-Infusionssystem gerichtet, umfassend wenigstens einen Dampf-Infusionsbehälter mit einer angeschlossenen Pumpe, mit der Produkt aus dem Dampf-Infusionsbehälter abgepumpt werden kann. Bei der angeschlossenen Pumpe kann es sich um eine Zentrifugalpumpe handeln. Bei der Pumpe kann zumindest das Laufrad, der Gehäusedeckel und/oder die Rückwand der Pumpe beschichtet sein, insbesondere mit einer (wie zuvor für den Verteilerkopf und den Dampf-Infusionsbehälter beschriebenen) Beschichtung aus der Klasse der "Diamantähnlichen Kohlenstoffbeschichtungen", die insbesondere mit Silizium, Sauerstoff und/oder Fluor modifiziert sein kann. Die Schichtdicke der Beschichtung kann insbesondere 3-5 µm betragen. Die Beschichtung kann insbesondere mittels PACVD-Verfahren (Plasma-assisted Chemical Vapor Deposition) appliziert sein oder werden. Durch den Einbau geeigneter Elemente wie Silizium, Sauerstoff oder Fluor kann die Beschichtung so modifiziert sein oder werden, dass ihre Oberflächenenergie verringert ist oder sinkt und ihre Antihaftwirkung verstärkt ist oder zunimmt. Beispielsweise können die Oberflächen der Pumpe bzw. der Pumpenbestandteile, die mit Produkt in Kontakt kommen mit der zuvor beschriebenen Beschichtung beschichtet sein. Dies kann insbesondere die Bildung von Ablagerungen bzw. Verschmutzungen, auch Fouling genannt, reduzieren, und somit insbesondere die Laufzeit des Dampf-Infusionsbehälter zwischen notwendigen Reinigungszyklen erhöhen. Besonders vorteilhaft ist dies bei der Verwendung von hoch-proteinhaltigen Produkten, da diese erfahrungsgemäß im Bereich der Pumpe zu Ablagerungen neigen. Das Dampf-Infusionssystem kann einen Verteilerkopf gemäß Anspruch 1 aufweisen, alternativ kann aber auch auf den Kühlkanal zum Kühlen des Verteilkopfes verzichtet werden.

Die Erfindung umfasst des Weiteren ein Verfahren zur Herstellung eines solchen Dampf-Infusionsbehälters, das insbesondere den Schritt des Beschichtens innenliegender Oberflächen des Dampf-Infusionsbehälters, insbesondere mittels PACVD-Verfahren, umfassen kann.

Die Erfindung stellt weiterhin ein System zur Ultrahocherhitzung eines flüssigen Produktes bereit. Das System zur Ultrahocherhitzung eines flüssigen Produktes, insbesondere eines flüssigen Lebensmittelproduktes, umfasst ein zuvor beschriebenes Dampf-Infusionssystem zur Ultrahocherhitzung des Produktes und eine hinter dem Dampf-Infusionssystem angeordnete Abfüllanlage für das Produkt.

Weitere Aspekte und Details der Erfindung sind in den beiliegenden Figuren (nicht notwendigerweise maßstabsgetreu) gezeigt. Hierbei zeigt:
- Figur 1: schematisch einen Dampf-Infusionsbehälter
- Figur 2: schematisch einen Verteilerkopf, wobei der Kühlkanal teilweise auf einer kreisbogenförmigen Bahn um die Mitte des Verteilerkopfes angeordnet ist
- Figur 3: schematisch einen Verteilerkopf, wobei der Kühlkanal insbesondere entlang der größeren vier Segmente verläuft
- Figur 4: schematisch einen Verteilerkopf mit acht rotationssymmetrischen Segmenten
- Figur 5: schematisch einen Verteilerkopf, wobei der Kühlkanal flächig mit mehreren Richtungswechseln verläuft
- Figur 6: schematisch einen Verteilerkopf mit zwölf Segmenten, wobei der Kühlkanal insbesondere parallel zur Grenze zwischen dem inneren und äußeren Bereich des Verteilerkopfes verläuft
- Figur 7: schematisch einen Verteilerkopf mit drei mäanderförmig verlaufenden Kühlkanälen
- Figur 8: schematisch ein System zur Ultrahocherhitzung eines flüssigen Produktes;

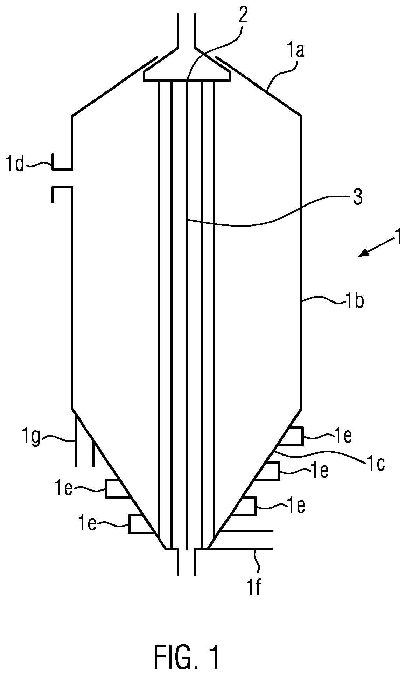

Figur 1 zeigt schematisch einen Dampf-Infusionsbehälter 1. Der Dampf-Infusionsbehälter 1 umfasst einen Kopf 1a, der wie in diesem Beispiel etwa konisch ausgebildet sein kann. Er umfasst des Weiteren einen, insbesondere zylindrischen, Körper 1b und einen Auffangbereich 1c für das Produkt, der ebenfalls beispielsweise konisch ausgebildet sein kann. Der Dampf-Infusionsbehälter 1 umfasst des Weiteren eine Zuführung 1d für Dampf. Er kann optional des Weiteren eine Kühlmöglichkeit für den Auffangbereich umfassen, die beispielsweise ein spiralförmig den Auffangbereich 1c umgebendes Rohr 1e oder alternativ einen Doppelmantel umfassen kann. Die Kühlmöglichkeit kann insbesondere eine Zuführung 1f und Ableitung 1g für temperiertes Wasser umfassen.

In dem Kopf 1a ist ein Verteilerkopf 2 zum Einbringen eines flüssigen Produktes in den Dampf-Infusionsbehälter 1 umfasst. Der Verteilerkopf 2 ist so ausgebildet und angeordnet, dass er einen Produktstrahl 3 erzeugen kann, der von oben nach unten in etwa parallel zu dem, insbesondere zylindrischen, Körper 1b verläuft, insbesondere, ohne die Wände des Körpers zu berühren. Dieser Produktstrahl 3 kann durch im Dampf-Infusionsbehälter 1 durch die Zuführung 1d von zugeführtem Dampf für den Zeitraum seines Falls erwärmt und im Auffangbereich 1c aufgefangen und optional gekühlt werden. Am Dampf-Infusionsbehälter 1 kann am Auffangbereich ein Ventil, eine Pumpe zum Abpumpen des flüssigen Produktes, und weitere Bauteile, z.B. eine Heißhaltestrecke, anschließbar oder angeschlossen sein.

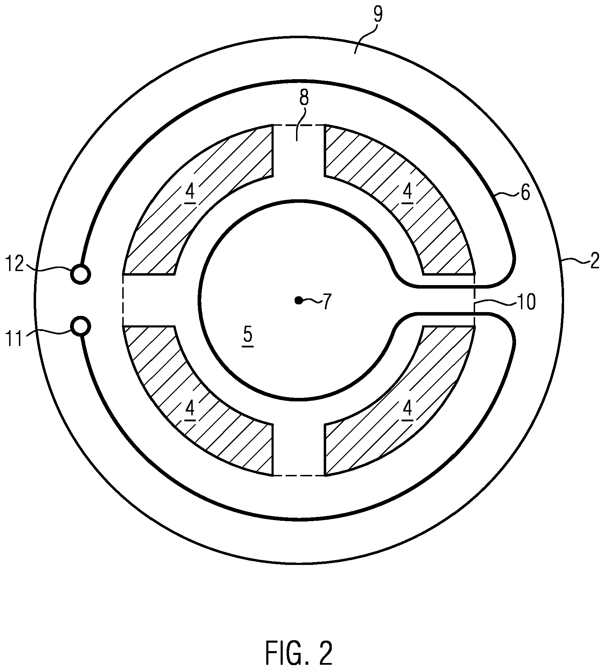

Figur 2 zeigt schematisch einen Verteilerkopf 2 zum Einbringen eines flüssigen Produktes, insbesondere eines flüssigen Lebensmittelproduktes, in einen nicht dargestellten Dampf-Infusionsbehälter. Der Verteilerkopf 2 umfasst Öffnungen 4 zum Einbringen des Produktes in den Dampf-Infusionsbehälter in Form eines, insbesondere aus Teilstrahlen zusammengesetzten, Produktstrahls. Die Öffnungen 4 sind in vier rotationssymmetrischen Segmenten angeordnet, wobei die Segmente durch einen öffnungsfreien Bereich 5 voneinander getrennt sind. Der Verteilerkopf 2 umfasst einen Kühlkanal 6, der teilweise auf einer kreisbogenförmigen Bahn um eine Mitte 7 des Verteilerkopfes 2 in einem inneren Bereich 8 und einem äußeren Bereich 9 des Verteilerkopfes 2 verläuft. Der gestrichelte Kreis 10 kennzeichnet die Grenze zwischen dem inneren Bereich 8 und dem äußeren Bereich 9. Der Kühlkanal 6 ist zumindest teilweise in dem öffnungsfreien Bereich 5 angeordnet und verläuft zumindest teilweise zur bzw. weg von der Mitte 7 des Verteilerkopfes 3, insbesondere radial, und durchquert dabei die Grenze 10 zwischen dem inneren Bereich 8 und dem äußeren Bereich 9. An den Enden des Kühlkanals ist ein Zulauf 11 bzw. ein Ablauf 12 für den Kühlkanal 6 angeordnet, mit dem der Kühlkanal 6 in einen Kühlkreislauf angeschlossen werden kann.

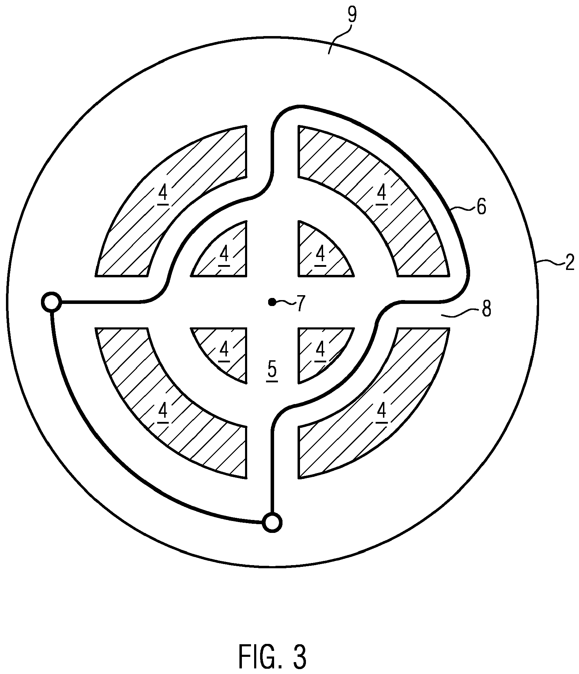

Figur 3 zeigt schematisch einen Verteilerkopf 2, bei dem die Öffnungen 4 beispielhaft in acht Segmenten angeordnet sind, wobei die vier Segmente, die näher an der Mitte 7 des Verteilerkopfes 2 angeordnet sind, kleiner sind als die restlichen vier Segmente. Die acht Segmente sind durch den öffnungsfreien Bereich 5 voneinander getrennt. Der Verteilerkopf 2 umfasst einen Kühlkanal 6, der teilweise auf einer kreisbogenförmigen Bahn um eine Mitte 7 des Verteilerkopfes 2 im inneren Bereich 8 und äußeren Bereich 9 des Verteilerkopfes 2 verläuft, insbesondere verläuft der Kühlkanal 6 mindestens teilweise entlang oder parallel zu den Grenzen der größeren vier Segmente. Der Kühlkanal 6 ist zumindest teilweise in dem öffnungsfreien Bereich 5 angeordnet und verläuft zumindest teilweise zur bzw. weg von der Mitte 7 des Verteilerkopfes 3, insbesondere radial, wobei er in dem gezeigten Beispiel nicht bis zur Mitte 7 des Verteilerkopfes läuft. In anderen Ausführungsformen (hier nicht gezeigt), kann der Kühlkanal insbesondere auch zur bzw. weg von der Mitte des Verteilerkopfes laufen und dabei durch die Mitte des Verteilerkopfes verlaufen. In dem gezeigten Beispiel kann der Kühlkanal insbesondere wie beispielhaft gezeigt in einem geschlossenen Kühlkreislauf angeordnet sein.

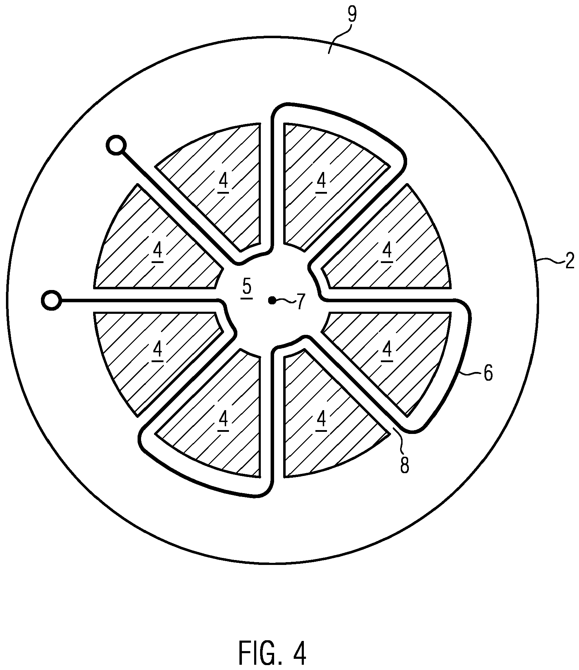

Figur 4 zeigt schematisch einen Verteilerkopf 2, bei dem die Öffnungen 4 in acht rotationssymmetrischen Segmenten angeordnet sind, wobei die Segmente durch den öffnungsfreien Bereich 5 voneinander getrennt sind. Der Verteilerkopf 2 umfasst einen Kühlkanal 6, der teilweise auf einer kreisbogenförmigen Bahn um eine Mitte 7 des Verteilerkopfes 2 im inneren Bereich 8 und äußeren Bereich 9 des Verteilerkopfes 2 verläuft. Der Kühlkanal 6 ist zumindest teilweise in dem öffnungsfreien Bereich 5 angeordnet und verläuft zumindest teilweise zur bzw. weg von der Mitte 7 des Verteilerkopfes 3, insbesondere radial, und durchquert dabei mehrere Male die Grenze zwischen dem inneren Bereich 8 und dem äußeren Bereich 9.

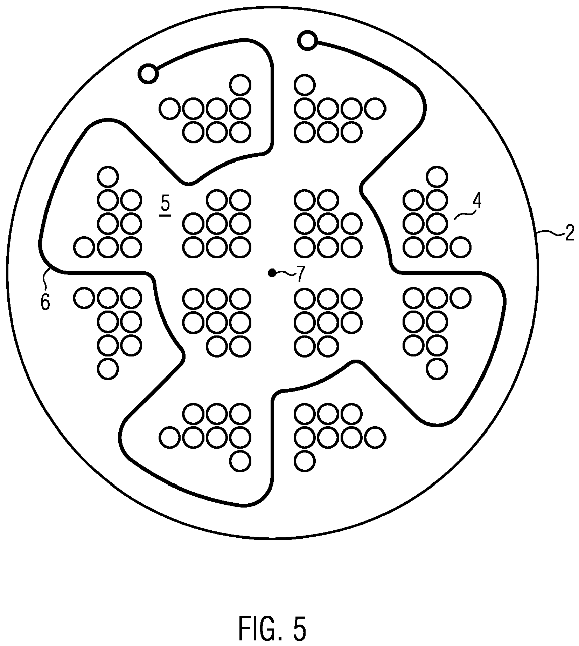

Figur 5 zeigt einen Verteilerkopf 2, bei dem die Öffnungen 4 in beispielhaft zwölf Segmenten angeordnet sind. Der Verteilerkopf 2 umfasst einen Kühlkanal 6, der teilweise in dem öffnungsfreien Bereich 5 angeordnet ist und zumindest teilweise zur bzw. weg von der Mitte 7 des Verteilerkopfes 3 verläuft, insbesondere radial, und dabei mehrere Male die Grenze zwischen dem inneren Bereich und dem äußeren Bereich durchquert. Der Kühlkanal 6 verläuft flächig mit mehreren Richtungswechseln.

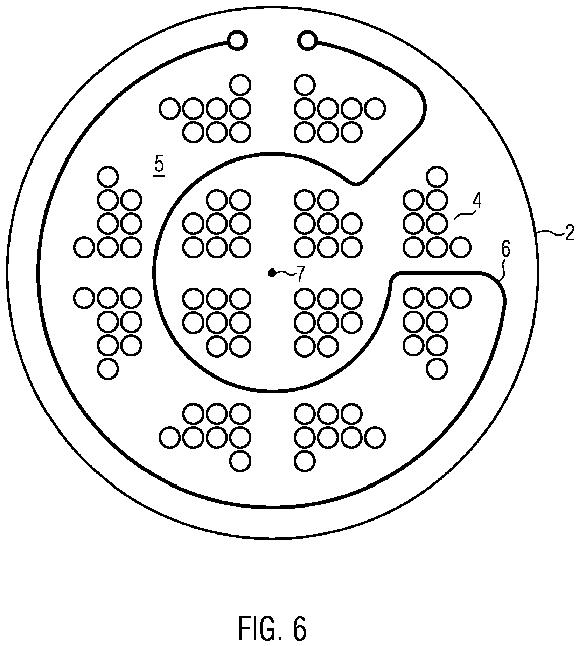

Figur 6 zeigt einen Verteilerkopf 2, bei dem die Öffnungen 4 in zwölf Segmenten angeordnet sind. Der Verteilerkopf 2 umfasst einen Kühlkanal 6, der teilweise auf einer kreisbogenförmigen Bahn um eine Mitte 7 des Verteilerkopfes 2 im inneren Bereich 8 und äußeren Bereich 9 des Verteilerkopfes 2 verläuft, insbesondere parallel zur Grenze zwischen dem inneren Bereich und dem äußeren Bereich. Der Kühlkanal 6 ist zumindest teilweise in dem öffnungsfreien Bereich 5 angeordnet und verläuft zumindest teilweise zur bzw. weg von der Mitte 7 des Verteilerkopfes 3, insbesondere radial.

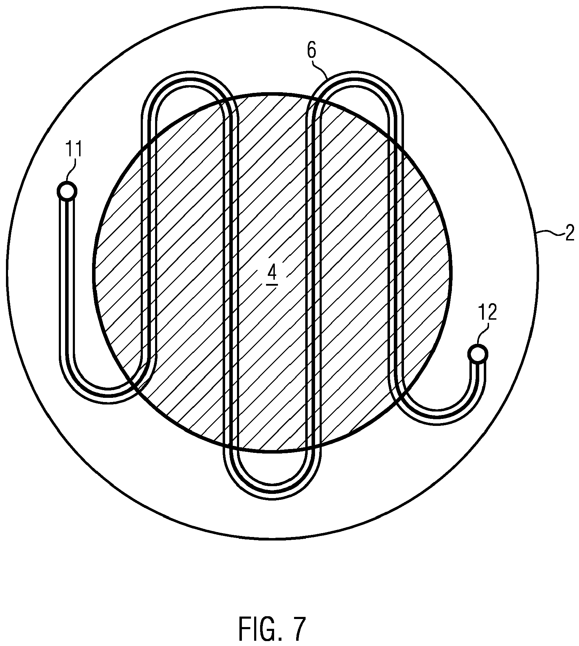

Figur 7 zeigt einen Verteilerkopf 2, der keinen öffnungsfreien Bereich umfasst. Die Öffnungen 4 sind in einem einzigen Segment angeordnet. Der Verteilerkopf umfasst drei Kühlkanäle 6, die parallel zueinander und flächig, insbesondere mäanderförmig verlaufen. In dem gezeigten Beispiel umfassen die drei Kühlkanäle 6 einen gemeinsamen Zulauf 11 und einen gemeinsamen Ablauf 12, die an einen Kühlkreislauf angeschlossen werden können. In anderen Ausführungsformen (hier nicht gezeigt) kann jeder der Kühlkanäle 6 einen eigenen Zulauf und einen eigenen Ablauf umfassen, oder einer oder mehrere der Kühlkanäle 6, aber nicht alle, können einen Zulauf und/oder einen Ablauf teilen.

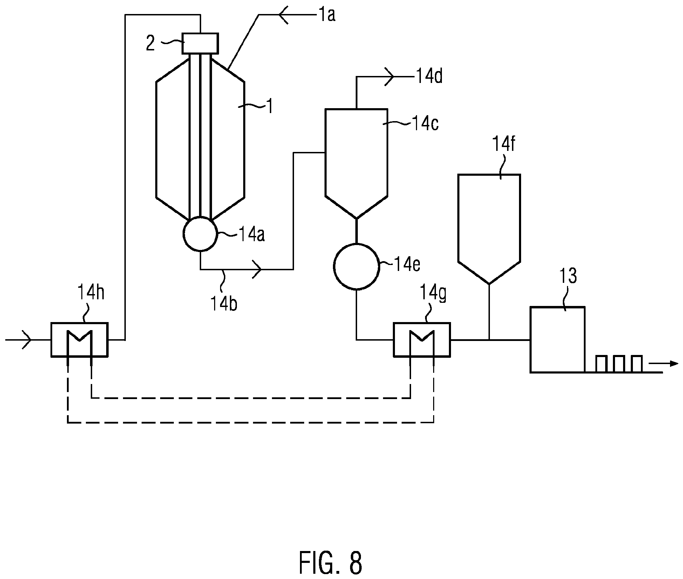

Figur 8 zeigt schematisch ein System zur Ultrahocherhitzung eines flüssigen Produktes. Das Produkt kann beispielsweise in das System durch einen (in der Figur beispielhaft links angeordneten) Eingang zugeführt werden. Das System zur Ultrahocherhitzung eines flüssigen Produktes umfasst ein Dampf-Infusionssystem mit einem Dampf-Infusionsbehälter 1 und einem Verteilerkopf 2 und einer hinter dem Dampf-Infusionssystem angeordneten Abfüllanlage 13 für das Produkt. Beispielhaft eingezeichnet ist eine Zuleitung für Dampf 1a in den Dampf-Infusionsbehälter 1. In anderen Ausführungsformen (nicht gezeigt), kann eine Zuleitung für Dampf in den Dampf-Infusionsbhälter auch an anderer Stelle des Dampf-Infusionsbehälters angeordnet sein und/oder mehrere Zuleitungen für Dampf umfasst sein. Aus der Abfüllanlage 13 können dann optional die fertig abgefüllten Produktbehälter, hier beispielhaft eingezeichnet, herausgeführt und weggeführt werden.

Eingezeichnet ist ebenfalls eine optional vorhandene Pumpe 14a, mit der Produkt aus dem Dampf-Infusionsbehälter 1 abgepumpt werden kann, eine optional vorhandene Heißhaltestrecke 14b und ein optionaler Flashkühler 14c, aus dem Dampf durch eine beispielhaft eingezeichnete optionale Ableitung 14d abgeführt werden kann. Des Weiteren kann das System zur Ultrahocherhitzung eine oder mehrere weitere Pumpen umfassen, um das Produkt zwischen den verschiedenen Behandlungsstationen weiter zu pumpen, insbesondere beispielhaft eingezeichnete Pumpe 14e, und einen optionalen Puffertank 14f, insbesondere zum Zwischenspeichern von einem pasteurisierten Produkt, stromaufwärts der Abfüllanlage 13.

Der optionale Puffertank 14f kann insbesondere stromabwärts eines optionalen Kühlers 14g und vor der Abfüllanlage 13 angeordnet sein. Der optionale Kühler kann insbesondere stromabwärts des Flashkühlers 14c angeordnet sein, wobei wie beispielhaft gezeigt zwischen Flashkühler 14c und Kühler 14g optional noch weitere Bauteile, hier insbesondere die optionale Pumpe 14e, angeordnet sein können.

Optional kann das System zur Ultrahocherhitzung eines flüssigen Produktes des Weiteren einen Vorwärmer 14h umfassen, der stromaufwärts des (vor dem) Dampf-Infusionsbehälter 1 angeordnet sein kann und das Produkt vor der Zuführung in den Dampf-Infusionsbehälter 1 vorwärmen kann. Optional können, wie hier beispielhaft durch die gestrichelte Verbindung eingezeichnet, der Vorwärmer 14h und der Kühler 14g miteinander in einem Wärmekreislauf verbunden sein oder, insbesondere über ein oder mehrere Bauteile, miteinander verbunden sein, um Wärme zurückzugewinnen. In anderen Ausführungsformen (hier nicht gezeigt), können Vorwärmer und Kühler nicht miteinander verbunden sein und/oder nur ein Vorwärmer oder ein Kühler (nicht beide) oder weder ein Vorwärmer noch ein Kühler vom System zur Ultrahocherhitzung eines flüssigen Produktes umfasst sein.

Es versteht sich, dass in den zuvor beschriebenen Ausführungsbeispielen genannte Merkmale nicht auf diese speziellen Kombinationen beschränkt und auch in beliebigen anderen Kombinationen möglich sind.

### Bezugszeichenliste

- 1: Dampf-Infusionsbehälter
- 1a: Kopf
- 1b: Körper
- 1c: Auffangbereich
- 1d: Zuführung für Dampf
- 1e: Rohr
- 1f: Zuführung für temperiertes Wasser
- 1g: Ableitung für temperiertes Wasser
- 2: Verteilerkopf
- 3: Produktstrahl
- 4: Öffnungen
- 5: Öffnungsfreier Bereich
- 6: Kühlkanal
- 7: Mitte des Verteilerkopfes
- 8: Innerer Bereich des Verteilerkopfes
- 9: Äußerer Bereich des Verteilerkopfes
- 10: Grenze zwischen innerem Bereich 8 und äußerem Bereich 9
- 11: Zulauf
- 12: Ablauf
- 13: Abfüllanlage
- 14a: Pumpe
- 14b: Heißhaltestrecke
- 14c: Flashkühler
- 14d: Ableitung
- 14e: Pumpe
- 14f: Puffertank
- 14g: Kühler
- 14h: Vorwärmer

## Patentansprüche

1. Verteilerkopf (2) zum Einbringen eines flüssigen Produktes, insbesondere eines flüssigen Lebensmittelproduktes, in einen Dampf-Infusionsbehälter (1), umfassend wenigstens eine Öffnung (4) zum Einbringen des Produktes in den Dampf-Infusionsbehälter (1) in Form eines, insbesondere aus Teilstrahlen zusammengesetzten, Produktstrahls,
**dadurch gekennzeichnet, dass**
der Verteilerkopf (2) wenigstens einen Kühlkanal (6) zum Kühlen des Verteilerkopfes (2) umfasst.

2. Verteilerkopf nach Anspruch 1, wobei der wenigstens eine Kühlkanal zumindest teilweise, insbesondere komplett, in einem äußeren und/oder inneren Bereich des Verteilerkopfes angeordnet ist.

3. Verteilerkopf nach wenigstens einem der vorangegangenen Ansprüche, wobei der wenigstens eine Kühlkanal zumindest teilweise, insbesondere komplett, auf einer kreisbogenförmigen Bahn um die Mitte des Verteilerkopfes, insbesondere im äußeren und/ der inneren Bereich des Verteilerkopfes, verläuft.

4. Verteilerkopf nach wenigstens einem der vorangegangenen Ansprüche, wobei der wenigstens eine Kühlkanal zumindest teilweise zur Mitte des Verteilerkopfes und/oder ausgehend von der Mitte des Verteilerkopfes, insbesondere radial, verläuft.

5. Verteilerkopf nach wenigstens einem der vorangegangenen Ansprüche, wobei der Verteilerkopf mindestens einen öffnungsfreien Bereich umfasst,
insbesondere wobei der wenigstens eine Kühlkanal zumindest teilweise in wenigstens einem des mindestens einen öffnungsfreien Bereichs angeordnet ist.

6. Verteilerkopf nach wenigstens einem der vorangegangenen Ansprüche, wobei der wenigstens eine Kühlkanal flächig mit wenigstens einem Richtungswechsel, insbesondere mäanderförmig, verläuft.

7. Verteilerkopf nach wenigstens einem der vorangegangenen Ansprüche, wobei der Querschnitt des wenigstens einen Kühlkanals größer ist als der Querschnitt wenigstens einer der wenigstens einen Öffnung.

8. Verteilerkopf nach wenigstens einem der vorangegangenen Ansprüche, wobei der wenigstens eine Kühlkanal ein Material mit einer Wärmeleitfähigkeit von mindestens 100 W/(m K), insbesondere Kupfer, umfasst, insbesondere wobei der wenigstens eine Kühlkanal aus dem Material, insbesondere Kupfer, besteht.

9. Verteilerkopf nach wenigstens einem der vorangegangenen Ansprüche, wobei der Verteilerkopf zumindest teilweise konturiert ist, wobei insbesondere die zum Dampf gewandte Seite des Verteilerkopfes und/oder der äußere Bereich des Verteilerkopfes und/oder wenigstens ein Bereich ohne Öffnungen, konturiert ist, wobei die Konturierung insbesondere ausgebildet ist, um entstehende Kondensat-Tropfen abzuleiten, damit diese nicht mit dem Produktstrahl interferieren.

10. Verteilerkopf nach wenigstens einem der vorangegangenen Ansprüche, wobei zumindest ein Teil des Verteilerkopfes beschichtet ist.

11. Verteilerkopf nach wenigstens einem der vorangegangenen Ansprüche, wobei der wenigstens eine Kühlkanal rohrartig ausgebildet ist und/oder ein Rohr umfasst.

12. Verteilerkopf nach wenigstens einem der vorangegangenen Ansprüche, wobei der wenigstens eine Kühlkanal mit einem Kühlmedium durchströmbar ist.

13. Verteilerkopf nach Anspruch 11, wobei der wenigstens eine Kühlkanal in wenigstens einem Kühlkreislauf, insbesondere in einem geschlossenen Kühlkreislauf, angeordnet ist.

14. Verteilerkopf nach Anspruch 11 oder 12, wobei der wenigstens eine Kühlkanal wenigstens einen Zulauf und wenigstens einen Ablauf für das Kühlmedium umfasst.

15. Verfahren zur Herstellung eines Verteilerkopfes (2) nach wenigstens einem der vorangegangenen Ansprüche, wobei wenigstens ein Teil des Verteilerkopfes (2) mittels generativer Fertigung hergestellt wird.

16. Verfahren nach Anspruch 14, wobei wenigstens ein Teil des Verteilerkopfes mittels konventioneller Fertigung hergestellt wird.

17. Verfahren nach Anspruch 14 oder 15, wobei der Verteilerkopf zumindest teilweise aus Kunststoff, insbesondere aus Polyetheretherketon, PEEK, hergestellt wird.

18. Verfahren nach wenigstens einem der Ansprüche 14 bis 16, wobei ein Rohling, insbesondere eine Flanschplatte, mit dem wenigstens einen Kühlkanal mittels generativer Fertigung hergestellt wird und optional die wenigstens eine Öffnung mittels konventioneller Fertigung eingearbeitet wird.

19. Dampf-Infusionssystem umfassend wenigstens einen Dampf-Infusionsbehälter (1) zum Erwärmen eines flüssigen Produktes, insbesondere eines flüssigen Lebensmittelproduktes, und wenigstens einen Verteilerkopf (2) nach wenigstens einem der Ansprüche 1 bis 14 zum Einbringen des Produktes in den wenigstens einen Dampf-Infusionsbehälter (1).

20. System zur Ultrahocherhitzung eines flüssigen Produktes, insbesondere eines flüssigen Lebensmittelproduktes, umfassend ein Dampf-Infusionssystem nach dem vorhergehenden Anspruch zur Ultrahocherhitzung des Produktes und eine hinter dem Dampf-Infusionssystem angeordnete Abfüllanlage (13) für das Produkt.
